# EUROPEAN PATENT APPLICATION

(11) **EP 4 546 614 A1**
(43) Date of publication of application: **30.04.2025**
(21) Application number: 24208367.3
(22) Date of filing: 23.10.2024
(51) Int. Cl.: H02K 1/276, H02K 7/04, H02K 15/035, H02K 15/121, H02K 15/165

(54) **ROTOR AND METHOD FOR MANUFACTURING ROTOR**

(30) Priority: 24.10.2023 JP 2023182669
(71) Applicant: Yamaha Hatsudoki Kabushiki Kaisha, Iwata-shi, Shizuoka 438-8501 (JP)
(72) Inventor: MITSUI, Kohei, Iwata-shi, Shizuoka, 4388501 (JP); OISHI, Takeshi, Iwata-shi, Shizuoka, 4388501 (JP); HATA, Ryosuke, Iwata-shi, Shizuoka, 4388501 (JP)
(74) Representative: Stöckeler, Ferdinand

(57) **Abstract**

A rotor 1 includes a rotor shaft 11, a rotor core 12 including a magnet housing hole 122, a permanent magnet 13 housed in the magnet housing hole with a gap therebetween, and a resin part 14 that fixes the permanent magnet. The resin part 14 includes a core end surface resin section 141 provided on an end surface of the rotor core and an in-core resin section 143 provided to fill the gap between the permanent magnet and the magnet housing hole. The core end surface resin section 141, as seen in an axial direction, is configured to cover a portion of an end surface of the permanent magnet 13 by covering a portion of the magnet housing hole 122 and to expose at least two corners and of the end surface of the permanent magnet 13 by not covering portions of long edges and, and short edges and that define the at least two corners. This makes it easier to manufacture the rotor while maintaining or increasing permanent magnet holding force.

## Description

### Technical Field

The present invention relates to a rotor that forms a motor and a method for manufacturing the rotor.

### Background Art

Main components of a motor include a stator and a rotor. The stator is, for example, provided with coils that generate a magnetic field when an electric current flows therethrough. The rotor is provided with permanent magnets that interact with the magnetic field generated by the coils. The rotor rotates as the permanent magnets interact with the magnetic field generated by the coils. There are various methods for mounting permanent magnets in a rotor. One of known mounting methods involves embedding permanent magnets inside a rotor core using resin. This type of rotor is, for example, disclosed in Patent Literature (PTL) 1.

The rotor disclosed in PTL 1 has magnet housing holes in a rotor core thereof formed by laminating electromagnetic steel plates. The magnet housing holes are elliptical in shape as seen in the rotor axial direction and penetrate through the rotor core in the rotor axial direction. The magnet housing holes house permanent magnets therein and are filled with resin. The resin that fills the magnet housing holes forms a magnet fixing resin part that holds the permanent magnets in the rotor as a shaped product. Opposite end surfaces of the rotor core in the axial direction are respectively provided with rotor core gripping resin parts each having a substantially annular shape along the outer circumferential edge of the rotor core. The rotor core gripping resin parts are provided to cover opposite end portions of the opening of each magnet housing hole. The rotor core gripping resin parts do not extend to a central portion of the opening of each magnet housing hole, so that a central portion of each permanent magnet is exposed.

This rotor is manufactured as described below. First, the rotor core is placed in a lower mold carved with the shape of one of the rotor core gripping resin parts. Next, the permanent magnets are inserted into the magnet housing holes, and an upper mold carved with the shape of the other rotor core gripping resin part is placed thereon. The upper mold and the lower mold position the permanent magnets by holding the permanent magnets therebetween while making contact with central portions of upper and lower surfaces of the permanent magnets. These contact portions are exposed portions of the permanent magnets in the rotor as the shaped product. Next, the resin is poured into the mold, and the two rotor core gripping resin parts and the magnet fixing resin part are injection molded. In the mold, space for molding the two rotor core gripping resin parts and space for molding the magnet fixing resin part are connected through the opposite end portions of the magnet housing holes. Thus, the two rotor core gripping resin parts and the magnet fixing resin part are formed as a single integrated piece.

### Citation List

### Patent Literature

PTL 1: Japanese Patent Application Laid-Open Publication No. 2010-142038

### Summary of Invention

### Technical Problem

The rotor disclosed in PTL 1 achieves an improvement in manufacturing efficiency, a reduction in manufacturing costs, and a reduction in weight of the rotor since the two rotor core gripping resin parts and the magnet fixing resin part are formed simultaneously. Furthermore, in the manufacturing method of the rotor disclosed in PTL 1, the central portions of the upper and lower surfaces of the permanent magnets are brought into contact with the mold, and the permanent magnets are held from top and bottom for positioning. This method eliminates the need to provide positioning pins or the like for the permanent magnets, and thus the rotor core gripping resin parts have no holes for the positioning pins. Consequently, it is possible to maintain or increase permanent magnet holding force even though the parts for holding the permanent magnets, such as the two rotor core gripping resin parts and the magnet fixing resin part, are formed using resin. The present inventors considered a method that is different from the one disclosed in PTL 1 and that makes it easier to manufacture a rotor while maintaining or increasing permanent magnet holding force.

An object of the present invention is to provide a rotor and a method for manufacturing the rotor that make it easier to manufacture the rotor while maintaining or increasing permanent magnet holding force.

### Solution to Problem

(1) A rotor according to the present invention is a rotor for a motor, the rotor including: a rotor shaft; a rotor core including a magnet housing hole penetrating therethrough in an axial direction of the rotor shaft, the rotor core being fixed to the rotor shaft; a permanent magnet housed in the magnet housing hole with a gap therebetween and having four corners in at least one of end surfaces in the axial direction, the four corners being each defined by any of long edges and short edges that form the end surface; and a resin part that fixes the permanent magnet. The resin part includes a core end surface resin section provided at least on one of end surfaces of the rotor core in the axial direction, and an in-core resin section provided to fill the gap and connected to the core end surface resin section. The core end surface resin section, as seen in the axial direction, is configured to cover a portion of the end surface of the permanent magnet by covering a portion of the magnet housing hole and to expose at least two corners of the end surface of the permanent magnet by not covering portions of edges that define the at least two corners among the long edges and the short edges.

In the rotor described above, at least two corners of the end surface of the permanent magnet are exposed. These exposure regions are formed by allowing the permanent magnet to be in contact with the mold when the resin part is formed. Specifically, in a manufacturing step, the permanent magnet is put in the magnet housing hole before the resin part is formed, so that at least two exposure regions of the end surface (lower surface) of the permanent magnet are supported on a lower mold. For example, two diagonally opposing corners of the end surface of the permanent magnet are supported on the mold, or corners at opposite ends of one of the long edges and a portion of the other long edge of the end surface are supported on the mold. Such a configuration allows the mold to support the permanent magnet with a small support area, making it easier to form the resin part. Furthermore, the configuration allows for a reduction in the area of exposure of the permanent magnet as seen in the axial direction, making it possible to increase the area of the core end surface resin section. As a result, reduction in permanent magnet holding force is less likely to occur despite the use of resin to form a part for holding the permanent magnet. Thus, the rotor described above can make it easier to manufacture the rotor while maintaining or increasing permanent magnet holding force.

(2) In the rotor described in (1), the core end surface resin section, as seen in the axial direction, may be configured to expose at least two diagonally opposing corners of the end surface of the permanent magnet by not covering portions of edges that define the at least two corners among the long edges and the short edges.

In the case of the rotor described in (2), opposite ends of a diagonal line on the end surface of the permanent magnet are supported on the mold. Since opposite ends of a diagonal line, which is the longest virtual line on the end surface of the permanent magnet, are supported on the mold, the mold can support the permanent magnet even if the permanent magnet has a decreased area of exposure. Thus, the rotor described above can make it easier to manufacture the rotor while maintaining or increasing permanent magnet holding force.

(3) In the rotor described in (1) or (2), the core end surface resin section may be configured so that an area of exposure of the end surface of the permanent magnet is smaller than an area where the magnet housing hole is covered by the core end surface resin section.

In the case of the rotor described in (3), a reduction in the area of exposure of the permanent magnet is achieved, making it possible to increase the area of the core end surface resin section. Thus, the rotor described above can make it easier to manufacture the rotor while maintaining or increasing permanent magnet holding force. It should be noted that the core end surface resin section may be configured so that the area of exposure of the end surface of the permanent magnet is smaller than the area where the end surface of the permanent magnet is covered by the core end surface resin section.

(4) In the rotor described in any one of (1) to (3), the core end surface resin section may be configured to expose the at least two corners by not covering 1/4 or less of each long edge and 1/2 or less of each short edge that define the at least two corners.

In the case of the rotor described in (4), a reduction in the area of exposure of the permanent magnet is achieved, making it possible to increase the area of the core end surface resin section. Thus, the rotor described above can make it easier to manufacture the rotor while maintaining or increasing permanent magnet holding force.

(5) In the rotor described in any one of (1) to (4), the gap may be provided at least between an inner surface of the magnet housing hole and at least one of the short edges of the end surface of the permanent magnet as seen in the axial direction. The core end surface resin section may be configured to cover a portion of the one short edge and at least a portion of the gap as seen in the axial direction.

In the case of the rotor described in (5), the in-core resin section formed from the resin that fills the gap adjacent to the short edge mainly plays a role in fixing the permanent magnet. This configuration allows for, for example, a reduction in size of the gap between the inner surface of the magnet housing hole and the long edges as seen in the axial direction. As a result of the reduction in size of the gap adjacent to the long edges, the orientation of the permanent magnet is easily maintained when the permanent magnet is in the magnet housing hole without the resin part. Thus, the rotor described above can make it easier to manufacture the rotor while maintaining or increasing permanent magnet holding force.

(6) In the rotor described in any one of (1) to (5), the core end surface resin section may have an annular shape and may be provided on the end surface of the rotor core to span a circumferential direction of the rotor core. The core end surface resin section may have an outer perimeter in a shape including continuous protrusions and recesses in a circumferential direction of the rotor shaft.

In the case of the rotor described in (6), for example, portions that need to be strong, such as portions where the core end surface resin section and the in-core resin section are connected, may be formed into a protrusion shape having a longer length in the radial direction of the rotor shaft, and portions that do not need to be particularly strong may be formed into a recess shape having a shorter length in the radial direction. That is, more resin is supplied for the portions that need to be strong, and less resin is supplied for the portions that do not need to be particularly strong. Thus, the rotor described above can not only make it easier to manufacture the rotor while maintaining or increasing permanent magnet holding force, but the rotor can also achieve a weight reduction.

(7) In the rotor described in any one of (1) to (6), an end surface of the core end surface resin section in the axial direction may include a reference portion that serves as a cutting reference position for adjusting weight balance of the rotor.

After the rotor has been manufactured, the rotational balance thereof is adjusted to finalize the rotor as a product. The rotational balance is, for example, adjusted by trimming a portion of the core end surface resin section of the rotor. In the case of the rotor described in (7), the reference portion that serves as a cutting reference position is provided. Thus, the rotor described above can not only make it easier to manufacture the rotor while maintaining or increasing permanent magnet holding force, but the rotor can also make it easier to adjust the rotational balance of the rotor. In the case of the rotor that includes the core end surface resin section having an outer perimeter in a shape including protrusions and recesses, in particular, the configuration in which the reference portion is provided in the portions having a protrusion shape for which more resin is supplied makes it easier to adjust the rotational balance of the rotor while maintaining or increasing permanent magnet holding force.

A method for manufacturing a rotor according to the present invention is a method for manufacturing a rotor for a motor, the method including: a step for preparing a mold including an upper mold and a lower mold; a step for placing, on the lower mold, a rotor core including a magnet housing hole penetrating therethrough in an axial direction of a rotor shaft through-hole in which a rotor shaft is mounted; a step for putting, in the magnet housing hole in the rotor core placed on the lower mold, a permanent magnet having four corners in at least one of end surfaces in the axial direction, in such a manner that the end surface faces toward the lower mold and the permanent magnet is housed in the magnet housing hole with a gap therebetween, the four corners being each defined by any of long edges and short edges that form the end surface; and a step for fixing the permanent magnet housed in the magnet housing hole by mating the upper mold with the lower mold and pouring resin into the mold. The step for preparing the mold includes preparing the lower mold that includes a support part for supporting the end surface of the permanent magnet and that is carved with a shape of a core end surface resin section to be provided on an end surface of the rotor core to be in contact with the lower mold. The step for fixing the permanent magnet includes pouring the resin into the mold to fill the magnet housing hole with the resin through the gap, and thus forming the core end surface resin section and an in-core resin section, which fills the gap and is connected to the core end surface resin section in the rotor, as a single integrated piece. The step for putting in the permanent magnet includes allowing at least two corners of the end surface of the permanent magnet to be in contact with the lower mold so that portions of the long edge(s) and the short edge(s) that define the at least two corners are supported on the support part while keeping a portion of the end surface of the permanent magnet from making contact with the lower mold by providing a space between a portion of the magnet housing hole and the lower mold as seen in the axial direction.

The following describes configurations, terms, and the like for the present invention.

The "rotor shaft" has, for example, a solid circular cylindrical shape. The rotor shaft may have, for example, a hollow circular cylindrical shape. The rotor shaft includes, for example, a rotation axis of the rotor. Rotation of the rotor shaft causes, for example, rotation of the rotor. The rotor shaft is, for example, equivalent to an output shaft of a motor.

The "rotor core" rotates, for example, integrally with the rotor shaft. The rotor core is, for example, formed by laminating a plurality of electromagnetic steel plates. The rotor core has, for example, a hollow circular cylindrical shape. The rotor core includes, for example, a rotor shaft through-hole into which the rotor shaft is inserted and fixed. The rotor shaft through-hole opens, for example, at opposite end surfaces thereof in the axial direction of the rotor shaft. The rotor shaft through-hole is, for example, provided so that the central axis thereof substantially coincides with the central axis of the rotor core.

The rotor core includes, for example, at least one magnet housing hole. The at least one magnet housing hole opens, for example, at opposite end surfaces thereof in the axial direction of the rotor shaft. In a configuration in which the rotor core includes a plurality of magnet housing holes, for example, the plurality of magnet housing holes are arranged in the circumferential direction of the rotor core. No particular limitations are placed on the shape of the at least one magnet housing hole in a cross-section perpendicular to the axial direction of the rotor shaft. However, in the cross-section perpendicular to the axial direction of the rotor shaft, the cross-sectional area of the at least one magnet housing hole is larger than that of the permanent magnet. The at least one magnet housing hole has, for example, a larger volume than the permanent magnet.

The "permanent magnet" is, for example, housed in the magnet housing hole. In a configuration in which a plurality of magnet housing holes are provided, a plurality of permanent magnets are provided. The plurality of permanent magnets are each housed in a corresponding one of the magnet housing holes. No particular limitations are placed on the type of the permanent magnet. The permanent magnet is, for example, a neodymium magnet. The permanent magnets may be, for example, a ferrite magnet. The permanent magnet may be, for example, a sintered magnet or a bonded magnet. No particular limitations are placed on the shape of the permanent magnet. The permanent magnet has, for example, a rectangular parallelepiped shape. The permanent magnet may have, for example, a curved shape in a cross-section perpendicular to the axial direction of the rotor shaft.

At least one of end surfaces of the permanent magnet in the axial direction of the rotor shaft has, for example, four corners. That is, at least one of the end surfaces of the permanent magnet in the axial direction of the rotor shaft includes, for example, four edges. At least one of the end surfaces of the permanent magnet in the axial direction of the rotor shaft includes, for example, two long edges and two short edges. The two long edges may have the same length or different lengths. The two long edges refer to, for example, the two longest edges of the four edges. The two long edges refer to, for example, the longest edge and the second longest edge of the four edges. The two long edges may be straight lines or curved lines. The two short edges may have the same length or different lengths. The two short edges refer to, for example, the two shortest edges of the four edges. The two short edges refer to, for example, the shortest edge and the second shortest edge of the four edges. The two short edges may be straight lines or curved lines. Each of the corners may be, for example, any of a right angle, an acute angle, and an obtuse angle as seen in the axial direction of the rotor shaft. The corners may be, for example, chamfered or rounded. The diagonally opposing corners are, for example, defined as a first corner defined by a first long edge and a first short edge, and a second corner defined by a second long edge and a second short edge that are different from the first long edge and the first short edge.

The permanent magnet has, for example, substantially the same length as the rotor core in the axial direction of the rotor shaft. However, the permanent magnet may be, for example, longer or shorter than the rotor core in the axial direction of the rotor shaft. In the axial direction of the rotor shaft, for example, at least one of the end surfaces of the permanent magnet is located substantially at the same position as a corresponding one of end surfaces of the rotor core. At least one of the end surfaces of the permanent magnet is, for example, located substantially in the same plane as the corresponding one of the end surfaces of the rotor core. However, at least one of the end surfaces of the permanent magnet may protrude from or may be located further inward than the corresponding one of the end surfaces of the rotor core in the axial direction of the rotor shaft.

The permanent magnet is, for example, housed in the magnet housing hole with a gap therebetween as seen in the axial direction of the rotor shaft. The gap is, for example, provided at least between the inner surface of the magnet housing hole and a side surface including any of the short edges of the permanent magnet. The gap is, for example, provided between the magnet housing hole and at least one of the short edges of at least one of the end surfaces of the permanent magnet as seen in the axial direction of the rotor shaft. The gap may be, for example, provided at least between the inner surface of the magnet housing hole and a side surface including one of the long edges of the permanent magnet. The gap is, for example, provided at least between the magnet housing hole and a side surface including one of the long edges of the permanent magnet so that the permanent magnet does not topple over in a state in which the gap is yet to be filled with the resin, for example.

No particular limitations are placed on how a plurality of permanent magnets are arranged. The plurality of permanent magnets are, for example, arranged in the circumferential direction of the rotor shaft. The magnetization direction of the plurality of permanent magnets may be, for example, aligned with the radial direction or the axial direction of the rotor shaft. The plurality of permanent magnets are, for example, arranged so as to have alternately reversing magnet pole orientations. The plurality of permanent magnets may be, for example, arranged so that each pair of adjacent permanent magnets constitutes one magnetic pole. The plurality of permanent magnets may be, for example, arranged in a Halbach array.

No particular limitations are placed on the orientation of the permanent magnet. For example, the permanent magnet may have an orientation in which the long edges are at an angle relative to the circumferential direction of the rotor shaft (tangent direction at the position of the center of gravity of the permanent magnet in a virtual circle having a radius extending from the central axis of the rotor shaft to the position of the center of gravity of the permanent magnet) as seen in the axial direction of the rotor shaft. The permanent magnet may be, for example, disposed so that the distance between the central axis of the rotor shaft and one end of each of the long edges is different from the distance between the central axis of the rotor shaft and the other end of the long edge as seen in the axial direction of the rotor shaft. A plurality of permanent magnets may be, for example, arranged so that the spacing between each pair of permanent magnets constituting one magnet pole increases or decreases outward in the radial direction of the rotor shaft.

The "resin part" includes, for example, at least one core end surface resin section and an in-core resin section. The core end surface resin section fixes, for example, the permanent magnet in the axial direction of the rotor shaft. The core end surface resin section may be, for example, provided on either one or both of the end surfaces of the rotor core in the axial direction of the rotor shaft. No particular limitations are placed on the shape of the core end surface resin section. The core end surface resin section has, for example, an annular shape. The core end surface resin section has, for example, a platelike annular shape. The core end surface resin section includes, for example, protruding portions and recessed portions. The protruding portions and the recessed portions are, for example, arranged in the circumferential direction of the rotor shaft. The protruding portions and the recessed portions are, for example, arranged alternately in the circumferential direction of the rotor shaft. The protruding portions and the recessed portions are, for example, smoothly connected. The protruding portions are, for example, located further outward than the recessed portions in the radial direction of the rotor shaft. The protruding portions have, for example, a larger area than the recessed portions. The protruding portions have, for example, a longer length than the recessed portions in the radial direction of the rotor shaft.

The core end surface resin section covers, for example, at least a portion of the end surface of the rotor core. The core end surface resin section covers, for example, at least a portion of the gap between the magnet housing hole and the permanent magnet. The core end surface resin section covers, for example, at least a portion of the gap between the magnet housing hole and one of the short edges of at least one of the end surfaces of the permanent magnet. The core end surface resin section covers, for example, a portion of the end surface of the permanent magnet so that at least two exposure regions are exposed. For example, one of the exposure regions is a region that includes one corner of the end surface of the permanent magnet. This exposure region spans, for example, a predetermined range from the corner. This exposure region is, for example, provided so as to include at least a portion of a long edge and at least a portion of a short edge of the end surface of the permanent magnet. The area of one exposure region is, for example, smaller than the area of the gap as seen in the axial direction of the rotor shaft. The area of one exposure region is, for example, smaller than the area of the gap between the magnet housing hole and one of the short edges as seen in the axial direction of the rotor shaft.

For example, one of the exposure regions is provided at an end of one of the long edges, and another exposure region is provided at an end of the other long edge. The at least two exposure regions are, for example, provided to be diagonally opposite each other in the end surface of the permanent magnet. The at least two exposure regions are, for example, provided at opposite ends of one of the short edges. Alternatively, for example, the at least two exposure regions may be provided at opposite ends of one of the long edges. The end surface of the permanent magnet may have, for example, three or more exposure regions. One or more additional exposure regions that are provided in addition to the two exposure regions described above may include, for example, one of the long edges or one of the short edges. For example, the at least two exposure regions are provided so as to enclose the center of gravity of the permanent magnet as seen in the axial direction of the rotor shaft. For example, the at least two exposure regions are provided to be supported on the mold, so that the permanent magnet can maintain the orientation thereof in the mold without the resin provided therearound. The at least two exposure regions are, for example, provided so that the mold (lower mold) can support the permanent magnet. The area of the at least two exposure regions is, for example, greater than or equal to an area that is enough for the mold (lower mold) to support the permanent magnet.

The in-core resin section fixes, for example, the permanent magnet in the radial direction of the rotor shaft. The in-core resin section fixes, for example, the permanent magnet in the circumferential direction of the rotor shaft. The in-core resin section is, for example, formed from the resin that fills the magnet housing hole. More specifically, for example, the in-core resin section is formed from the resin that fills the gap between the magnet housing hole and the permanent magnet. The in-core resin section has, for example, a shape corresponding to the magnet housing hole.

The in-core resin section includes, for example, at least one overlapping region that overlaps the core end surface resin section as seen in the axial direction of the rotor shaft. The in-core resin section is, for example, connected to the core end surface resin section in the overlapping region. No particular limitations are placed on the shape of the overlapping region. The area of one overlapping region is, for example, greater than the area of one exposure region. However, for example, the area of one overlapping region may be substantially the same as or smaller than the area of one exposure region. The at least one overlapping region overlaps, for example, at least a portion of the magnet housing hole as seen in the axial direction of the rotor shaft. The at least one overlapping region overlaps, for example, at least a portion of the gap between the magnet housing hole and the permanent magnet as seen in the axial direction of the rotor shaft. At least a portion of the at least one overlapping region is provided to be in contact with one of the short edges of the end surface of the permanent magnet. The at least one overlapping region may be, for example, provided so as not to overlap the magnet housing hole. That is, for example, the at least one overlapping region may be provided so as to penetrate through the rotor core in the axial direction of the rotor shaft and overlap a through hole that is not the magnet housing hole as seen in the axial direction of the rotor shaft.

### Advantageous Effects of Invention

According to the present invention, it is possible to make it easier to manufacture a rotor while maintaining or increasing permanent magnet holding force.

### Brief Description of Drawings

[FIG. 1] FIG. 1 is a cross-sectional view of a rotor according to an embodiment of the present invention cut in a plane including a rotor shaft.
[FIG. 2] FIG. 2 is a diagram showing the rotor according to the present embodiment viewed in the axial direction of the rotor shaft.
[FIG. 3] FIG. 3 is an enlarged view of a portion of FIG. 2.
[FIG. 4] FIG. 4 is a diagram illustrating a method for manufacturing the rotor according to the present embodiment.
[FIG. 5] FIG. 5 is a diagram illustrating exposure regions of each permanent magnet in rotors according to modification examples of the present embodiment.

### Description of Embodiments

The following describes a rotor according to an embodiment of the present invention with reference to the drawings. It should be noted that the embodiment described below is merely an example. The present invention should not be construed in a limited way based on the embodiment described below.

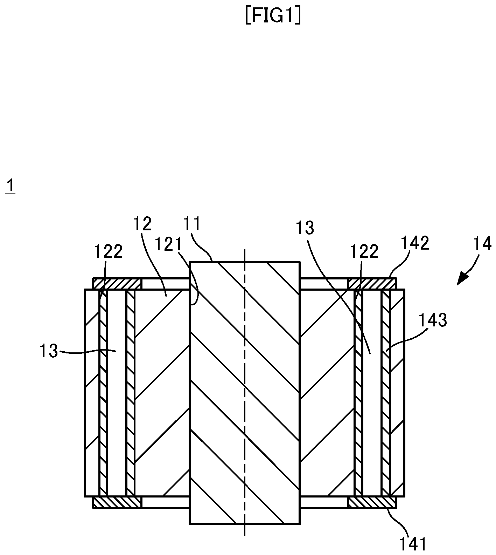

FIG. 1 is a cross-sectional view of a rotor according to the present embodiment cut in a plane including a rotor shaft. A rotor 1 and a stator, not shown, form a motor. The rotor 1 has a rotor shaft 11, a rotor core 12, a plurality of permanent magnets 13 (hatching omitted), and a resin part 14.

The rotor shaft 11 has a solid circular cylindrical shape. The central axis of the rotor shaft 11 is the center of rotation of the rotor 1.

The rotor core 12 is fixed to the rotor shaft 11. The rotor core 12 has a hollow circular cylindrical shape. The center of the rotor core 12 has a rotor shaft through-hole 121 as seen in the axial direction of the rotor shaft 11. The rotor shaft 11 is inserted into the rotor shaft through-hole 121 and fixed. The rotor core 12 is provided outward of the rotor shaft 11 in the radial direction of the rotor shaft 11. The rotor core 12 is configured to be rotatable with the rotor shaft 11. The rotor core 12 is formed by laminating electromagnetic steel plates. The rotor core 12 includes a plurality of magnet housing holes 122. The plurality of magnet housing holes 122 penetrate through the rotor core 12 in the axial direction of the rotor shaft 11. The plurality of magnet housing holes 122 respectively house the permanent magnets 13. The plurality of permanent magnets 13 have a rectangular parallelepiped shape. In the axial direction of the rotor shaft 11, each of opposite end surfaces of the plurality of permanent magnets 13 is located on substantially the same plane as a corresponding one of end surfaces of the rotor core 12.

The resin part 14 fixes the permanent magnets 13. The resin part 14 includes two core end surface resin sections 141 and 142, and an in-core resin section 143. In the axial direction of the rotor shaft 11, the core end surface resin section 141 is provided on the lower end surface of the rotor core 12, and the core end surface resin section 142 is provided on the upper end surface of the rotor core 12. The in-core resin section 143 is provided so as to fill gaps between the magnet housing holes 122 and the permanent magnets 13. The in-core resin section 143 connects the core end surface resin section 141 and the core end surface resin section 142. It should be noted that the two core end surface resin sections 141 and 142 have the same configuration. The following therefore describes the core end surface resin section 141.

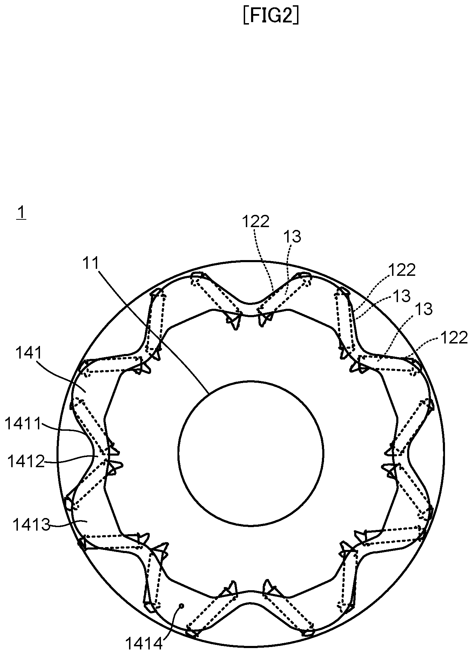

FIG. 2 is a diagram showing the rotor according to the present embodiment viewed in the axial direction of the rotor shaft. The plurality of magnet housing holes 122 are arranged in the circumferential direction of the rotor shaft 11. The plurality of magnet housing holes 122 have a uniform cross-sectional shape in the axial direction of the rotor shaft 11. The plurality of magnet housing holes 122 respectively house the permanent magnets 13. Each pair of two adjacent permanent magnets 13 functions as a pair of permanent magnets that constitute one magnetic pole. The permanent magnets in each pair are arranged in a V-shape with the spacing between the permanent magnets increasing outward in the radial direction of the rotor shaft 11.

The core end surface resin section 141 has an annular shape. The core end surface resin section 141 spans the circumferential direction of the rotor core 12. The core end surface resin section 141 has an outer perimeter 1411 in a shape including continuous protrusions and recesses in the circumferential direction of the rotor shaft 11. Portions having a recess shape of the outer perimeter 1411 of the core end surface resin section 141 constitute recessed portions 1412. Portions having a protrusion shape of the outer perimeter 1411 of the core end surface resin section 141 constitute protruding portions 1413. The protruding portions 1413 are located further outward than the recessed portions in the radial direction of the rotor shaft 11. The protruding portions 1413 have a reference portion 1414 that serves as a cutting reference position for adjusting the weight balance of the rotor. The reference portion 1414 is recessed in the axial direction of the rotor shaft 11. The protruding portions 1413 may have a plurality of reference portions 1414.

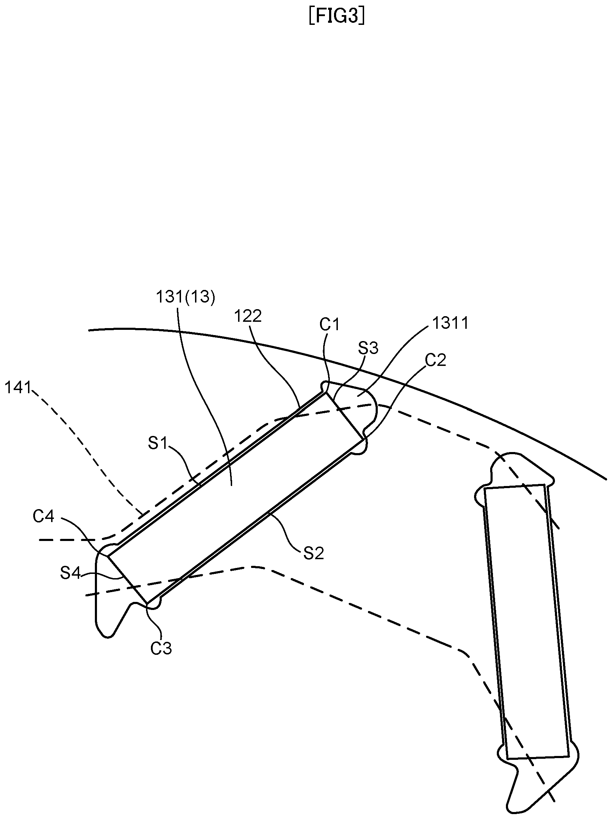

FIG. 3 is an enlarged view of a portion of FIG. 2. In FIG. 3, the core end surface resin section 141 is depicted as a dashed line. The end surface 131 of each permanent magnet 13 has four corners C1, C2, C3, and C4. The four corners C1, C2, C3, and C4 are each defined by any of long edges S1 and S2, and short edges S3 and S4 that form the end surface 131. Small gaps are provided between a side surface of each permanent magnet 13 that includes the long edge S1 and an inner surface of the corresponding magnet housing hole 122, and between a side surface of the permanent magnet 13 that includes the long edge S2 and the inner surface of the magnet housing hole 122. Gaps larger than the gaps between the long edges S1 and S2 and the magnet housing hole 122 are provided between a side surface of the permanent magnet 13 that includes the short edge S3 and the inner surface of the magnet housing hole 122, and between a side surface of the permanent magnet 13 that includes the short edge S4 and the inner surface of the magnet housing hole 122. The gaps between the long edges S1 and S2 and the magnet housing hole 122, and the gaps between the short edges S3 and S4 and the magnet housing hole 122 are connected together, constituting a gap 1311 between the permanent magnet 13 and the magnet housing hole 122.

The core end surface resin section 141 covers a portion of the end surface 131 of each permanent magnet 13 by covering a portion of each magnet housing hole 122 as seen in the axial direction of the rotor shaft 11. The core end surface resin section 141 is configured to expose the two corners C 1 and C3 of the end surface 131 of each permanent magnet 13 by not covering portions of the long edge S1 and the short edge S3 that define the corner C1, and portions of the long edge S2 and the short edge S4 that define the corner C3. The two corners C1 and C3 are diagonally opposite each other in the end surface 131 of the permanent magnet 13. The core end surface resin section 141 exposes the corner C1 by not covering 1/4 or less of the long edge S1 and 1/2 or less of the short edge S3 that define the corner C1. The same is true for the corner C3. The core end surface resin section 141 is also configured to cover a portion of the short edge S3 and at least a portion of the gap 1311 provided at least between the magnet housing hole 122 and the short edge S3. The core end surface resin section 141 is configured so that the area of exposure (total area of exposure) of the end surfaces 131 of the permanent magnets 13 is smaller than the area (total area) where the magnet housing holes 122 are covered by the core end surface resin section 141.

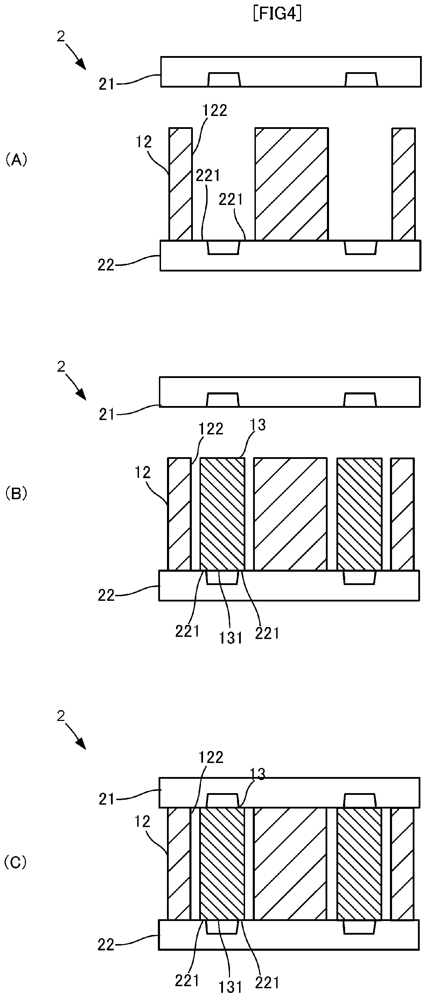

FIG. 4 is a diagram illustrating a method for manufacturing the rotor according to the present embodiment. Manufacturing steps are carried out in the order of (A), (B), and (C). The manufacturing method includes a preparation step, a placement step, a housing step, and a fixation step.

Referring to (A), in the preparation step, a mold 2 including an upper mold 21 and a lower mold 22 is prepared. The upper mold 21 and the lower mold 22 are respectively carved with shapes corresponding to the core end surface resin sections 141 and 142. The lower mold 22 includes support parts 221 for supporting the end surfaces 131 of the permanent magnets 13.

In the placement step, the rotor core 12 is placed on the lower mold 22. The rotor core 12 includes the magnet housing holes 122 that penetrate therethrough in the axial direction of the rotor shaft through-hole in which the rotor shaft 11 is mounted.

Referring to (B), in the housing step, the permanent magnets 13 are put in the magnet housing holes 122 of the rotor core 12 in such a manner that each end surface 131 faces toward the lower mold 22 and each permanent magnet 13 is housed in the corresponding magnet housing hole 122 with a gap therebetween. In the resulting state, the end surfaces 131 of the permanent magnets 13 are in contact with and supported on the support parts 221. The two corners C1 and C3 of the end surface 131 of each permanent magnet 13 are in contact with the lower mold 22 in such a manner that portions of the long edges and the short edges that define the two corners are supported on the support parts 221. In the end surface 131 of the permanent magnet 13, a region that spans a predetermined range from the corner C1 and a region that spans a predetermined range from the corner C3 are in contact with and supported on the support parts 221. The remaining regions in the end surface 131 of the permanent magnet 13 do not make contact with the lower mold 22.

Referring to (C), in the fixation step, the upper mold 21 is lowered and mated with the lower mold 22. Thereafter, the resin is poured into the mold 2. The resin is, for example, a thermosetting resin. However, no limitations are placed on the type of the resin, and an appropriate resin is selected as needed. A gate through which the resin is poured is provided at a location in the lower mold 22 where the shape of the core end surface resin section 141 is carved. However, no particular limitations are placed on the location of the gate. When the resin is poured through the gate, the resin first fills space for forming the core end surface resin section 141 in the lower mold 22. The resin then flows into the gaps between the magnet housing holes 122 and the permanent magnets 13 to fill space for forming the in-core resin section 143. Finally, the resin fills space for forming the core end surface resin section 142 in the upper mold 21. Thereafter, the mold 2 is heated to harden the resin, so that the permanent magnets 13 housed in the magnet housing holes 122 are fixed. As described above, the core end surface resin sections 141 and 142, and the in-core resin section 143 are formed as a single integrated piece.

### <Modification Examples>

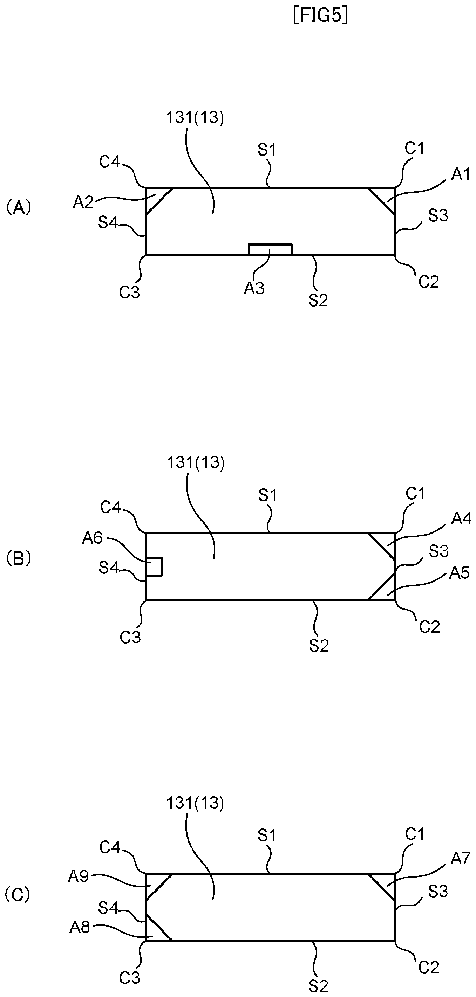

FIG. 5 is a diagram illustrating exposure regions of each permanent magnet in rotors according to modification examples of the present embodiment. The foregoing embodiment is described using a configuration in which the diagonally opposing corners C1 and C2 of the end surface 131 of each permanent magnet 13 are exposed. However, corners to be exposed are not limited as such.

Referring to (A), for example, the corner C1 and the corner C4 of the end surface 131 may be exposed. The corner C4 is defined by the long edge S1 and the short edge S4. The corners C1 and C4 are located at opposite ends of the long edge S1. In addition, a portion of the long edge S2, not the long edge S1, is exposed. That is, a region A1 that spans a predetermined range from the corner C1, a region A2 that spans a predetermined range from the corner C4, and a region A3 that spans a predetermined range from the portion of the long edge S2 are exposed.

Referring to (B), for example, the corner C1 and the corner C2 of the end surface 131 may be exposed. The corner C2 is defined by the long edge S2 and the short edge S3. The corners C1 and C2 are located at opposite ends of the short edge S3. In addition, a portion of the short edge S4, not the short edge S3, is exposed. That is, a region A4 that spans a predetermined range from the corner C1, a region A5 that spans a predetermined range from the corner C2, and a region A6 that spans a predetermined range from the portion of the short edge S4 are exposed.

Referring to (C), for example, the corner C1, the corner C3, and the corner C4 of the end surface 131 may be exposed. The corner C3 is defined by the long edge S2 and the short edge S4. The corners C3 and C4 are located at opposite ends of the short edge S4. That is, a region A7 that spans a predetermined range from the corner C1, a region A8 that spans a predetermined range from the corner C3, and a region A9 that spans a predetermined range from the corner C4 are exposed. It should be noted that all the four corners C1, C2, C3, and C4 may be exposed, although not shown. In short, the only requirement is that at least two corners of the end surface 131 of each permanent magnet 13 are exposed.

### Reference Signs List

1 Rotor
11 Rotor shaft
12 Rotor core
121 Rotor shaft through-hole
122 Magnet housing hole
13 Permanent magnet
131 End surface
1311 Gap
14 Resin part
141, 142 Core end surface resin section
1411 Outer perimeter
1412 Recessed portion
1413 Protruding portion
1414 Reference portion
143 In-core resin section
2 Mold
21 Upper mold
22 Lower mold
221 Support part
C1 to C4 Corner
S1, S2 Long edge
S3, S4 Short edge

## Claims

1. A rotor (1) for a motor, the rotor (1) comprising:
a rotor shaft (11);
a rotor core (12) including a magnet housing hole (122) penetrating therethrough in an axial direction of the rotor shaft (11), the rotor core (12) being fixed to the rotor shaft (11);
a permanent magnet (13) housed in the magnet housing hole (122) with a gap (1311) therebetween and having four corners (C1 - C4) in at least one of end surfaces (131) in the axial direction, the four corners (C1 - C4) being each defined by any of long edges (S1, S2) and short edges (S3, S4) that form the end surface (131); and
a resin part (14) that fixes the permanent magnet (13),
the resin part (14) including
a core end surface resin section (141, 142) provided at least on one of end surfaces (131) of the rotor core (12) in the axial direction, and
an in-core resin section (143) provided to fill the gap (1311) and connected to the core end surface resin section (141, 142), wherein
the core end surface resin section (141, 142), as seen in the axial direction, is configured to cover a portion of the end surface (131) of the permanent magnet (13) by covering a portion of the magnet housing hole (122) and to expose at least two corners (C1, C3) of the end surface (131) of the permanent magnet (13) by not covering portions of edges that define the at least two corners (C1, C3) among the long edges (S1, S2) and the short edges (S3, S4).

2. The rotor (1) according to claim 1, wherein
the core end surface resin section (141, 142), as seen in the axial direction, is configured to expose at least two diagonally opposing corners (C1, C3) of the end surface (131) of the permanent magnet (13) by not covering portions of edges that define the at least two corners (C1, C3) among the long edges (S1, S2) and the short edges (S3, S4).

3. The rotor (1) according to claim 1 or 2, wherein
the core end surface resin section (141, 142) is configured so that an area of exposure of the end surface (131) of the permanent magnet (13) is smaller than an area where the magnet housing hole (122) is covered by the core end surface resin section (141, 142).

4. The rotor (1) according to any one of claims 1 to 3, wherein
the core end surface resin section (141, 142) is configured to expose the at least two corners (C1, C3) by not covering 1/4 or less of each long edge (S1, S2) and 1/2 or less of each short edge (S3, S4) that define the at least two corners (C1, C3).

5. The rotor (1) according to any one of claims 1 to 4, wherein
the gap (1311) is provided at least between an inner surface of the magnet housing hole (122) and at least one of the short edges (S3, S4) of the end surface (131) of the permanent magnet (13) as seen in the axial direction, and
the core end surface resin section (141, 142) is configured to cover a portion of the one short edge (S3, S4) and at least a portion of the gap (1311) as seen in the axial direction.

6. The rotor (1) according to any one of claims 1 to 5, wherein
the core end surface resin section (141, 142) has an annular shape, is provided on the end surface (131) of the rotor core (12) to span a circumferential direction of the rotor core (12), and has an outer perimeter in a shape including continuous protrusions and recesses in a circumferential direction of the rotor shaft (11).

7. The rotor (1) according to any one of claims 1 to 6, wherein
an end surface (131) of the core end surface resin section (141, 142) in the axial direction includes a reference portion that serves as a cutting reference position for adjusting weight balance of the rotor (1).

8. A method for manufacturing a rotor (1) for a motor, the method comprising:
a step for preparing a mold (2) including an upper mold (21) and a lower mold (22);
a step for placing, on the lower mold (22), a rotor core (12) including a magnet housing hole (122) penetrating therethrough in an axial direction of a rotor shaft through-hole (121) in which a rotor shaft (11) is mounted;
a step for putting, in the magnet housing hole (122) in the rotor core (12) placed on the lower mold (22), a permanent magnet (13) having four corners (C1 - C4) in at least one of end surfaces (131) in the axial direction, in such a manner that the end surface (131) faces toward the lower mold (22) and the permanent magnet (13) is housed in the magnet housing hole (122) with a gap (1311) therebetween, the four corners (C1 - C4) being each defined by any of long edges (S1, S2) and short edges (S3, S4) that form the end surface (131); and
a step for fixing the permanent magnet (13) housed in the magnet housing hole (122) by mating the upper mold (21) with the lower mold (22) and pouring resin into the mold (2), wherein
the step for preparing the mold (2) includes preparing the lower mold (22) that includes a support part for supporting the end surface (131) of the permanent magnet (13) and that is carved with a shape of a core end surface resin section (141, 142) to be provided on an end surface (131) of the rotor core (12) to be in contact with the lower mold (22),
the step for fixing the permanent magnet (13) includes pouring the resin into the mold (2) to fill the magnet housing hole (122) with the resin through the gap (1311), and thus forming the core end surface resin section (141, 142) and an in-core resin section (143), which fills the gap (1311) and is connected to the core end surface resin section (141, 142) in the rotor (1), as a single integrated piece, and
the step for putting in the permanent magnet (13) includes allowing at least two corners (C1, C3) of the end surface (131) of the permanent magnet (13) to be in contact with the lower mold (22) so that portions of edges that define the at least two corners (C1, C3) among the long edges (S1, S2) and the short edges (S3, S4) are supported on the support part while keeping a portion of the end surface (131) of the permanent magnet (13) from making contact with the lower mold (22) by providing a space between a portion of the magnet housing hole (122) and the lower mold (22) as seen in the axial direction.
